# EUROPÄISCHE PATENTSCHRIFT

(11) **EP 0 676 841 B1**
(45) Veröffentlichungstag und Bekanntmachung des Hinweises auf die Patenterteilung: **23.05.2001**
(21) Anmeldenummer: 95103724.1
(22) Anmeldetag: 15.03.1995
(51) Int. Cl.: H02G 3/12

(54) **Einrichtung zur Versorgung eines elektrisch betätigten Gerätes im Sanitärbereich mit einer Niedervolt-Betriebsspannung**
Supply device for electrically controlled apparatus with low operating voltage to employ in sanitary installations
Dispositif d'alimentation à basse tension de service pour un appareil à commande électrique pour des appareils sanitaires

(30) Priorität: 08.04.1994 DE 4412123
(43) Veröffentlichungstag der Anmeldung: 11.10.1995
(73) Patentinhaber: HANSA METALLWERKE AG, 70567 Stuttgart (DE)
(72) Erfinder: Schmidt, Heinz, D-70567 Stuttgart (DE); Weinmann, Werner, D-70794 Filderstadt (DE)
(74) Vertreter: Ostertag, Ulrich, Dr.

(56) Entgegenhaltungen:
- DE-A- 2 936 963
- US-A- 4 134 636

## Beschreibung

Die Erfindung betrifft eine Einrichtung zur Versorgung eines elektrisch betätigten Gerätes im Sanitärbereich mit einer Niedervolt-Betriebsspannung, die eine entsprechende über ein Niederspannungskabel mit der Sanitärarmatur zu verbindende Niederspannungsquelle enthält, wobei die Einrichtung als Baueinheit an einem Einsatz montiert ist, der zum Einsetzen in eine Norm-Unterputzdose ausgestattet ist.

Bekannte Einrichtungen dieser Art, wie sie gegenwärtig im Gebrauch sind, umfassen ein Gehäuse mit integriertem Trafo, an dem zum Anschluß an eine Unterputzsteckdose ein Schuko-Stecker angespritzt ist und zur Verbindung mit dem elektrisch betätigten Gerät mit einem Anschlußkabel mit Kupplungsstecker versehen ist.

Aus der DE 39 07 236 A1 ist eine Einrichtung zur Versorgung eines Umsetzers für ein Datenendgerät, z.B. einen Computer, mit einer Niedervolt-Betriebsspannung bekannt. Die Einrichtung umfaßt eine Niederspannungsquelle, die als Baueinheit in einem Einsatz montiert ist, der wiederum zum Einsetzen in eine Unterputzdose vorgesehen ist.

Da die Anschlußstelle, d.h. der Anschluß des Geräts an die Spannungsquelle innerhalb der Baueinheit, sich in der Regel im Naßbereich befindet, sind auftretende Gefahren durch Wassereinwirkung in den Einsatz nicht auszuschließen, auch wenn sowohl das Gerät, als auch die angeschlossene Spannungsquelle jeweils für sich wasserdicht ausgeführt sind und die anderen Anschlußparameter entsprechend den VDE-Richtlinien ausgeführt sind.

Aufgabe der vorliegenden Erfindung ist es, eine Einrichtung der eingangs genannten Art so auszugestalten, daß ein modulartiger Bausatz für mehrere Anschlußmöglichkeiten vorliegt, der eine wasserdichte Ausführung der Baueinheit ermöglicht und in der äußeren Ausgestaltung ästhetische Gesichtspunkte befriedigt, sowie preiswert herzustellen und einfach zu installieren ist.

Diese Aufgabe wird erfindungsgemäß dadurch gelöst, daß
der Einsatz mit Befestigungsmitteln versehen ist, die mit den Norm-Befestigungsmitteln der Unterputzdose zusammenwirken,
daß der Einsatz becherförmig ist, und
daß eine becherförmige Abdeckkappe an dem Einsatz befestigt ist, deren freier Rand unter Zwischenschaltung einer Dichtung an die Außenfläche des Mauerwerks, in welchem die Unterputzdose angeordnet ist, oder an einem dieses Mauerwerk überdeckenden Putz bzw. einer Verfliesung anlegbar ist.

Mittels den mit der Norm-Unterputzdose zusammenwirkenden Befestigungsmitteln, im allgemeinen klemmend wirkenden Befestigungsmitteln, ist eine Befestigung der Versorgungseinrichtung sicher gewährleistet. Die Befestigungsmittel sind ebenfalls insoweit genormt, als sie mit den unterschiedlichsten in der Unterputzdose unterzubringenden elektrischen Bauteilen (Steckdosen usw.) zusammenwirken können. In dem von dem becherförmigen Einsatz umschlossenen Innenraum können die verschiedenen Funktionsteile der Einrichtung untergebracht werden, während an seiner Außenseite die erforderlichen Befestigungselemente angeordnet werden können.

Es ist nicht erforderlich, daß die verschiedenen zu der erfindungsgemäßen Einrichtung gehörenden Elemente vollständig innerhalb des Raumes untergebracht werden, welcher von der Unterputzdose zur Verfügung gestellt wird. Dieser Raum wird vielmehr dadurch vergrößert, daß eine becherförmige Abdeckkappe an dem Einsatz befestigt ist, deren freier Rand unter Zwischenschaltung einer Dichtung an der Außenfläche des Mauerwerks, in welchem die Einputz-Dose angeordnet ist, oder an einem dieses Mauerwerk überdeckenden Putz bzw. einer Verfliesung auflegbar ist. Durch diese Abdeckkappe wird also eine sich über die Außenfläche des Mauerwerks erhebende "Ausbuchtung" geschaffen, deren Innenraum zusätzlich zum Innenraum der Unterputzdose zur Unterbringung der erfindungsgemäßen Einrichtung nutzbar gemacht wird.

Insbesondere können die Befestigungsmittel des Einsatzes mindestens einen radial überstehenden Befestigungsbereich umfassen, an welchem mindestens eine Befestigungsschraube angreift.

Unter sicherheitstechnischen Gesichtspunkten, insbesondere dem Spritzwasserschutz, wird bevorzugt, daß das Niederspannungskabel an der Niederspannungsquelle direkt angeschlossen und über eine wasserdichte Durchführung in der Abdeckkappe ausgeführt ist.

Sofern jedoch das bei der obigen Ausgestaltung dauerhaft an der Abdeckkappe festgelegte Niederspannungskabel störend sein sollte, kann auch eine Ausgestaltung zum Einsatz kommen, bei welcher in der Abdeckkappe eine Steckbuchse oder ein Stecker zum Anschluß des Niederspannungskabels vorgesehen ist, die bzw. der mit der Niederspannungsquelle elektrisch verbunden ist. Es versteht sich, daß in diesem Falle als Steckbuchse bzw. Stecker eine wasserdichte Ausführungsform zum Einsatz kommen muß. Dieses Ausführungsbeispiel der Erfindung hat den Vorteil, daß ggf. ein störendes Betriebskabel auch abgezogen werden kann.

Vorzugsweise ist die Niederspannungsquelle eine Batterie, die in einem an dem Einsatz festgelegten Batteriehalter lösbar befestigt ist. Der Einsatz von Batterien ist überall möglich, ohne daß es eines elektrischen Netzanschlusses bedürfte.

Der Batteriehalter kann dabei zwei Kontaktfedern umfassen, die mit dem Niederspannungskabel elektrisch verbunden oder verbindbar sind und bei eingesetzter Batterie an den Kontakten der Batterie elastisch federnd anliegen.

Die Befestigung der Batterie innerhalb des Batteriehalters erfolgt zweckmäßigerweise so, daß eine Spannlasche vorgesehen ist, welche mit mindestens einem Bereich elastisch federnd an der eingesetzten Batterie anliegt und dabei die Batterie in den Batteriehalter drückt.

Die elastische Vorspannung der Spannlasche kann in diesem Falle z.B. so erfolgen, daß die Spannlasche an der der Batterie abgewandten Seite einen Bügel aufweist, der ein Fenster des Batteriehalters durchgreift und an dem auf der der Batterie abgewandten Seite des Batteriehalters eine Feder angreift.

Bevorzugt weist die Spannlasche einen ebenen Hauptteil auf, der verschiebbar an einer Wand des Batteriehalters anliegt.

Die Spannlasche kann dabei an der Wand des Batteriehalters dadurch geführt sein, daß der Bügel einen Bereich aufweist, der parallel zum ebenen Hauptteil in einem Abstand von diesem verläuft, welcher der Stärke der Wand des Batteriehalters entspricht. Die Wand des Batteriehalters greift dabei also zwischen Hauptteil und Bügel der Spannlasche ein.

Ein besonders bevorzugtes Ausführungsbeispiel der Erfindung zeichnet sich dadurch aus, daß die Spannlasche zumindest teilweise aus Metall besteht und in der Position, die sie bei eingesetzter Batterie einnimmt, einen Abstand von den freiliegenden Bereichen der Kontaktfedern aufweist, dagegen in der Position, die sie bei entnommener Batterie einnimmt, die freiliegenden Bereiche der Kontaktfeder miteinander elektrisch verbindet. Auf diese Weise ist dafür gesorgt, daß der Versorgungsspannungseingang der elektrisch betätigten Sanitärarmatur, zu welcher das Niederspannungskabel führt, bei entnommener Batterie immer kurzgeschlossen ist. Dies trägt zur elektrischen Sicherheit der elektronischen Bauteile bei, die in der Sanitärarmatur vorgesehen sind.

Bei Verwendung von Batterien als Niederspannungsquelle empfiehlt sich, daß ein Elektronikbauteil an dem Einsatz vorgesehen ist, dem die Ausgangsspannung der Batterie zugeführt ist und das den Ladezustand der Batterie prüft, und daß an der Abdeckkappe eine Kontrollampe angebracht ist, die mit dem Elektronikbauteil verbunden ist und anzeigt, ob der Ladezustand der Batterie ausreicht. Durch einen kurzen Blick auf die fragliche Kontrollampe ist es daher möglich zu prüfen, ob die in der Unterputzdose untergebrachte Batterie funktionsfähig ist oder ausgetauscht werden muß.

Die Niederspannungsquelle kann alternativ zu den obigen Ausführungsbeispielen auch ein Transformator sein, dessen Primärwicklung mit einer in das Innere der Unterputzdose eingeführten Netzleitung verbindbar und dessen Sekundärwicklung mit dem Niederspannungskabel verbunden oder verbindbar ist. Die Verwendung von Transformatoren als Niederspannungsquelle hat den bekannten Vorteil, daß immer ausreichend elektrische Energie zur Verfügung steht und insoweit keine Kontrolle erforderlich ist. Auf die hiermit verbundene Notwendigkeit, einen geeigneten Netzanschluß zur Verfügung zu stellen, wurde jedoch bereits oben verwiesen.

Ausführungsbeispiele der Erfindung werden nachfolgend anhand der Zeichnung näher erläutert; es zeigen
- Figur 1:: einen Schnitt durch ein erstes Ausführungsbeispiel einer Einrichtung zur Versorgung eines elektrisch betätigten Gerätes im Sanitärbereich mit einer Niedrigvolt-Betriebsspannung;
- Figur 2:: einen Schnitt durch die Einrichtung von Figur 1 gemäß Linie II-II;
- Figur 3:: einen Schnitt, ähnlich der Figur 2, jedoch mit entnommener Batterie;
- Figur 4:: einen Schnitt durch die Einrichtung der Figuren 1 bis 3 gemäß Linie IV-IV von Figur 2;
- Figur 5:: einen Schnitt durch ein zweites Ausführungsbeispiel einer Einrichtung zur Versorgung eines elektrisch betätigten Gerätes im Sanitärbereich mit einer Niedrigvolt-Betriebsspannung gemäß Linie V-V von Figur 6;
- Figur 6:: einen Schnitt durch die Einrichtung von Figur 5 gemäß der dortigen Linie VI-VI.

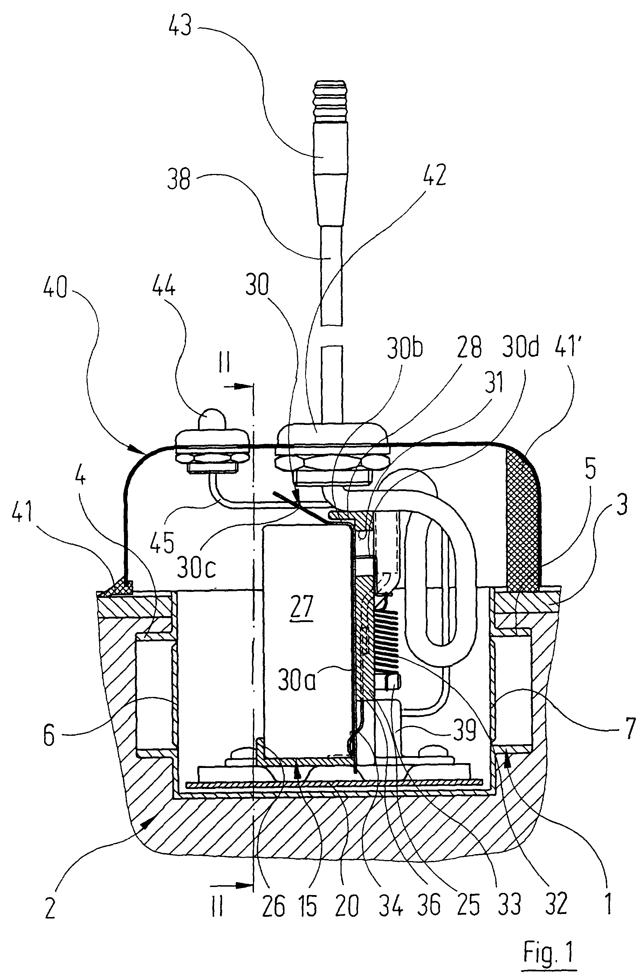

In den Figuren 1 bis 4 ist ein erstes Ausführungsbeispiel einer Einrichtung dargestellt, welche der Versorgung eines elektrisch betätigten Gerätes im Sanitärbereich (in der Zeichnung nicht dargestellt) mit einer niedrigen Betriebsspannung dient, wie diese für die verschiedenen elektronischen Bauteile sowie die den Wasserstrom steuernden Magnetventile erforderlich ist. Die genannten Figuren zeigen eine Unterputzdose 1 aus Kunststoff, die in einer entsprechenden Ausfräsung eines Mauerwerks 2 untergebracht ist. Das Mauerwerk 2 ist mit einem Putz bzw. einer Verfliesung 3 zur Sichtseite hin abgedeckt. Unterputzdosen 1 der hier dargestellten Art sind Normteile, die in der elektrischen Installation von Gebäuden gebräuchlich sind und im allgemeinen dazu verwendet werden, Verteiler- oder Steckdosen oder ähnliche Einrichtungen unterzubringen. In Figur 1 sind, wie dies bei derartigen Normteilen üblich ist, seitliche Anschlußstutzen 4, 5 dargestellt, die mit ausbrechbaren Fenstern 6, 7 versehen sind. Durch diese Stutzen 4, 5 können nach dem Ausbrechen der Fenster 6, 7 die im Mauerwerk 2 verlegten Netzleitungen in das Innere der Einputz-Dose 1 eingeführt werden. Bei dem Ausführungsbeispiel, welches in den Figuren 1 bis 4 dargestellt ist, werden jedoch die ausbrechbaren Fenster 6, 7 an ihrem Ort belassen, da ein Anschluß an die Netzleitung des Hauses nicht beabsichtigt ist.

Die Unterputzdose 1 selbst gehört nicht notwendig zu der hier beschriebenen Einrichtung; nur wenn ihr Vorhandensein nicht vorausgesetzt werden kann, wird sie werksseitig mitgeliefert.

Die Stromversorgungseinrichtung selbst ist als Baueinheit auf einem Einsatz 8 aufgebaut, der im wesentlichen ein becherförmiges Blech- oder Kunststofformteil ist. Der Einsatz 8 besitzt seitlich vorspringende Befestigungsbereiche 9, 10, die auch als umlaufender, radial überstehender Flansch gestaltet sein können. Die Befestigungsbereiche 9, 10 werden von Schrauben 11, 12 durchsetzt, deren Gewindeschäfte in Klemmstücke 13, 14 eingreifen.
Die Klemmstücke 13, 14 gehören zur üblichen Ausstattung der bekannten Unterputzdosen 1 und dienen normalerweise dazu, die in den Unterputzdosen 1 unterzubringenden Verteiler- oder Steckdosen zu befestigen. Sie sind innerhalb der Unterputzdose 1 axial bewegbar geführt. Werden die Befestigungsschrauben 11, 12 in die Klemmstücke 13, 14 eingedreht, so werden diese nach oben gegen eine Schrägfläche an dem Einsatz 8 gezogen und dabei gleichzeitig nach außen gedrückt. Auf diese Weise wird der Einsatz 8 innerhalb der Unterputzdose 1 durch Verklemmung fixiert.

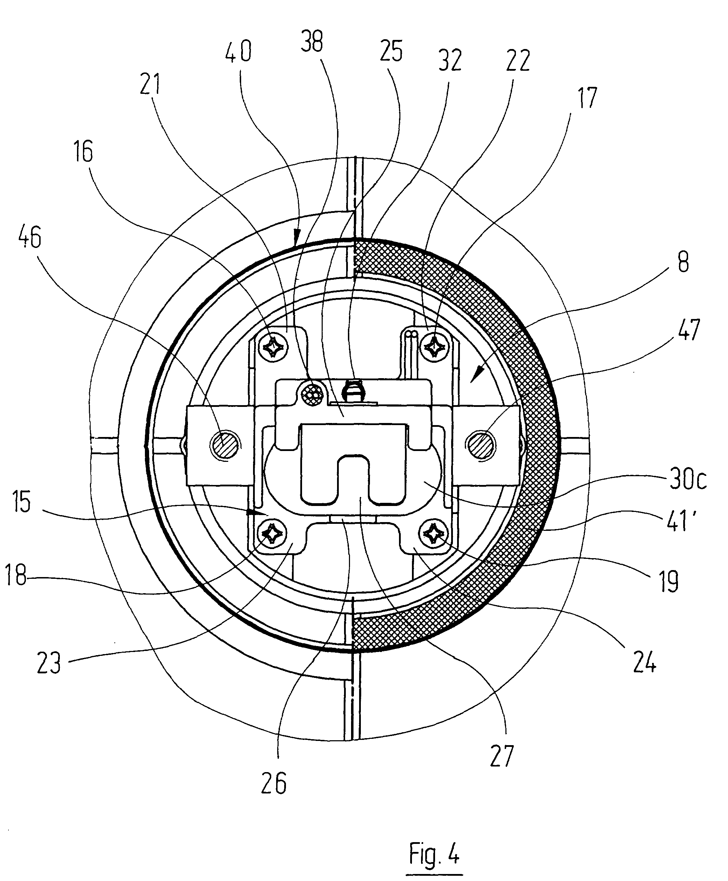

Auf dem Boden des becherförmigen Einsatzes 8 ist ein Batteriehalter 15 aufgeschraubt. Dies geschieht mit vier Schrauben 16, 17, 18, 19, welche vier vorstehende Befestigungslaschen 21, 22, 23, 24 der Bodenplatte 20 des Batteriehalters 15 durchsetzen (vergl. insbesondere Figur 4).

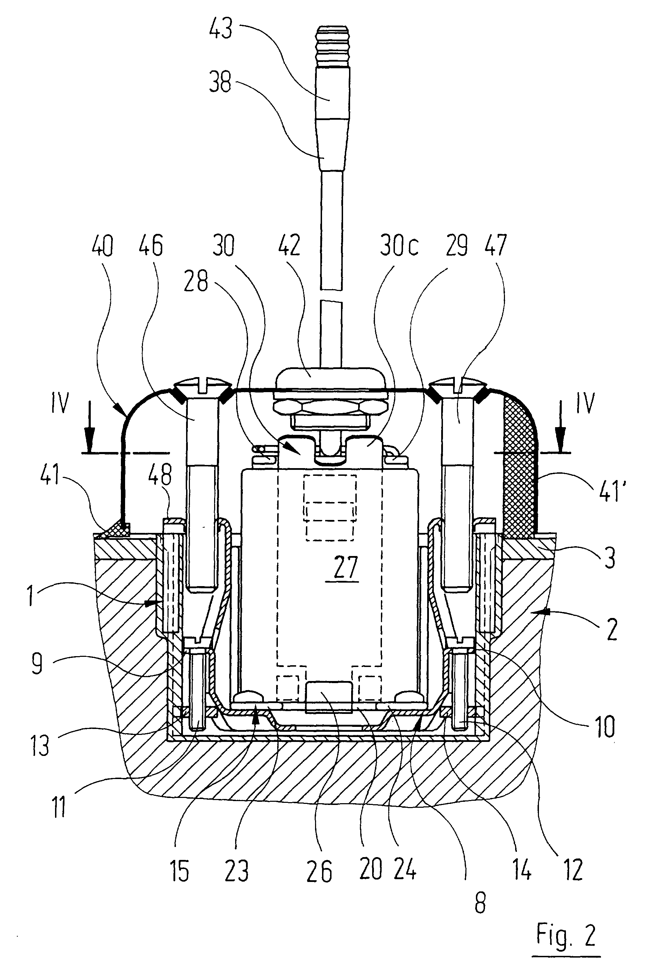

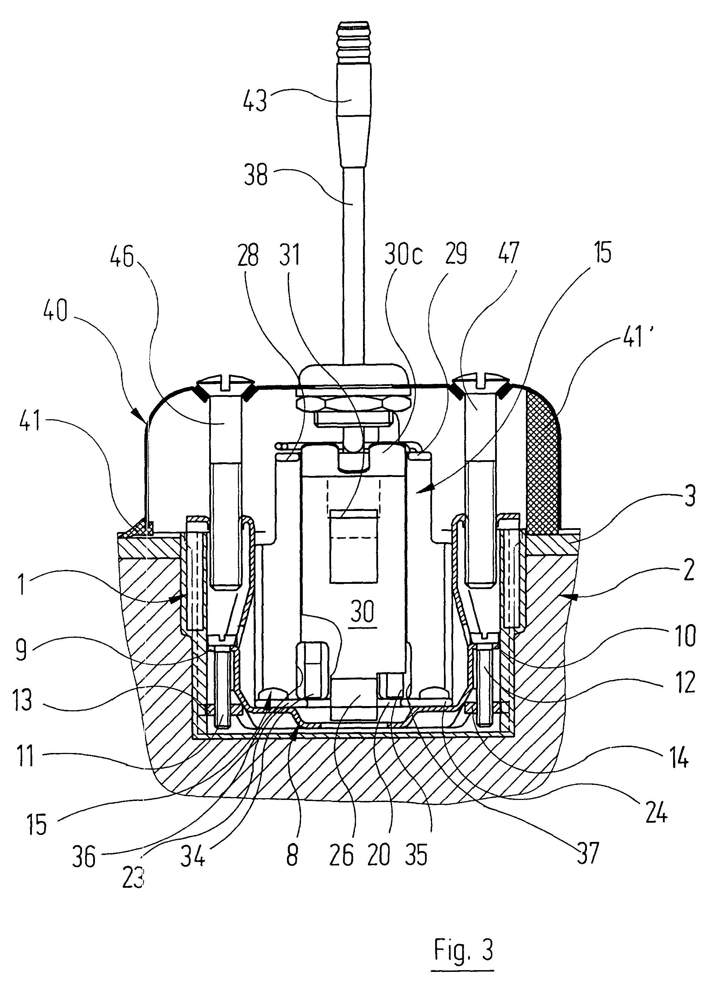

An die Bodenplatte 20 des Batteriehalters 15 sind eine vertikal verlaufende Halteplatte 25 und eine ebenfalls vertikal verlaufende Befestigungslasche 26 angeformt (vergl. insbesondere Figur 1). Die Befestigungslasche 26 erstreckt sich beim dargestellten Ausführungsbeispiel in der Sicht der Figuren 2 und 3 nicht über die vollständige Breite der Bodenplatte 20 bzw. der Halteplatte 25 sondern ist auf den mittleren Bereich beschränkt. Ihr Abstand von der Halteplatte 25 ist derart, daß zwischen ihr und der Halteplatte 25 das Ende einer Batterie 27 eingeführt werden kann, wie dies insbesondere die Figur 1 deutlich macht.

An das obere Ende der Halteplatte 25 des Batteriehalters 15 sind zwei seitliche, nunmehr wieder horizontal, also parallel zur Bodenplatte 20 verlaufende Haltelaschen 28, 29 in einer solchen Position angeformt, daß sie knapp oberhalb des oberen Endes der eingesetzten Batterie 27 zu liegen kommen. Erneut wird dies aus dem Schnitt der Figur 1 besonders deutlich. Diese Figur zeigt auch, wie die Batterie 27 an zwei Seiten vollständig und an zwei weiteren Seiten teilweise von Komponenten des Batteriehalters 15 umgeben ist, so daß sie in diesem zwar einerseits fest gehalten, andererseits aber in Richtung nach links oben (Sicht der Figur 1) entnommen werden kann.

Der Sicherung der Batterie 27 innerhalb des Batteriehalters 15 dient eine Spannlasche 30, die sich mit ihrem ebenen Hauptteil 30a entlang der vertikalen Halteplatte 25 des Batteriehalters 15, zwischen dieser und der Batterie 27, erstreckt. An den ebenen Hauptteil 30a der Spannlasche 30 schließt sich oben ein um 90° umgebogener Halteteil 30b an, der in noch zu beschreibender Weise elastisch an die Oberseite der eingesetzten Batterie 27 angedrückt wird. Die Spannlasche 30 läuft schließlich in einem Griffteil 30c aus, welches von der Oberfläche der eingesetzten Batterie 27 etwas nach oben abgebogen ist, so daß es leicht von Hand ergriffen werden kann.

An die Rückseite der Spannlasche 30 ist ein doppelt abgewinkelter Bügel 30d angesetzt, der ein Fenster 31 in der Halteplatte 25 durchsetzt. Am äußeren waagerechten Schenkel des Bügels 30d greift eine Zugfeder 32 an, welche sich parallel zur Halteplatte 25 auf deren Rückseite erstreckt und deren anderes Ende an einem mit der Halteplatte 25 verbundenen Stift 33 verankert ist.

Offensichtlich ist die Anordnung so, daß die Batterie 27 dadurch aus dem Batteriehalter 15 entfernt werden kann, daß die Spannlasche 30 durch Ergreifen an dem Griffteil 30c von Hand gegen die Wirkung der Zugfeder 32 nach oben gezogen wird; die Batterie 27 kommt so von der Spannlasche 30 frei und kann entnommen werden.

In den beiden seitlichen Bereichen der Halteplatte 25 des Batteriehalters 15 sind zwei Kontaktfedern 34, 35 eingearbeitet, die mit abgerundeten Enden durch Fenster 36, 37 in der Halteplatte 25 hindurchragen und bei eingesetzter Batterie 27 an deren Kontakten elastisch federnd anliegen. Die Kontaktfedern 34, 35 sind innerhalb der Halteplatte 25 mit den abisolierten Enden eines Niederspannungskabels 38 verbunden.

Das untere Ende der Spannlasche 30 ist als verhältnismäßig schmale Zunge ausgebildet, welche den Bereich zwischen den Fenstern 36 und 37 in der Halteplatte 25 durchgreift. Bei eingesetzter Batterie 27 (vergl. Figur 2) liegt der Bereich der Spannlasche 30, der volle Breite aufweist, oberhalb der Fenster 36 und 37 und damit auch außerhalb des Bereiches der Kontaktfedern 34, 35. Wird dagegen die Batterie 27 aus dem Batteriehalter 15 entnommen, wie dies in Figur 3 dargestellt ist, so rutscht die gesamte Spannlasche 30 unter dem Einfluß der Zugfeder 32 und geführt durch den Bügel 30d entlang der Halteplatte 25 nach unten, derart, daß nunmehr der breitere Bereich der Spannlasche 30 in Berührung mit den beiden Kontaktfedern 34 und 35 gelangt. Auf diese Weise werden die Kontakte zum Schutze der an das Niederspannungskabel 38 angeschlossenen Sanitärarmatur kurzgeschlossen.

In Figur 1 ist schematisch auf der Rückseite der Halteplatte 25 noch ein Elektronikbauteil 39 angedeutet, welchem die von der Batterie 27 abgegriffene Spannung zugeführt wird und der Kontrolle der Batteriespannung dient.

Wie die Figuren 1 bis 3 deutlich machen, ragen Batteriehalter 15 und die hieran angebrachte Batterie 27 nach oben aus dem Raum heraus, der von der Unterputzdose 1 innerhalb des Mauerwerkes 2 zur Verfügung gestellt wird. Aus diesem Grunde ist eine becherförmige Abdeckkappe 40 vorgesehen, welche die obere Öffnung der Unterputzdose 1 und die hierin untergebrachten Komponenten überwölbt und mit ihrem freien Rand an dem Putz bzw. der Verfliesung 3 anliegt. Zwischen diesem freien Rand der Abdeckkappe 40 und dem Putz bzw. der Verfliesung 3 ist eine Dichtung 41 vorgesehen, welche das Eindringen von Wasser 41 in den Innenraum vermeidet. In der jeweils linken Hälfte der Figuren 1 bis 4 ist eine erste Ausführungsform einer solchen Dichtung 41 dargestellt. Bei ihr handelt es sich um einen Dichtungsring mit verhältnismäßig geringer axialer Höhe, in dessen obere Stirnseite der freie Rand der Abdeckkappe 40 eingreift und der mit seiner Unterseite an dem Putz bzw. der Verfliesung 3 anliegt. In der rechten Hälfte der Figuren 1 bis 4 ist die Dichtung als Dichtring 41' mit verhältnismäßig großer axialer Erstreckung dargestellt, welcher mit seiner äußeren Umfangswand an der inneren Umfangswand der Abdeckkappe 40 und mit seiner unteren Stirnfläche an dem Putz bzw. der Verfliesung 3 elastisch anliegt.

Das Niederspannungskabel 38 ist durch eine bekannte wasserdichte Durchführung 42 aus der Abdeckkappe 40 herausgeführt und trägt an seinem Ende einen Stecker 43, der in eine entsprechende Buchse an der zu versorgenden Sanitärarmatur eingeführt werden kann.

In der oberen Stirnseite der Abdeckkappe 40 ist außerdem eine Kontrolleuchte 44 angebracht, welche über ein Kabel 45 mit dem kontrollierenden Elektronikbauteil 39 verbunden ist und den korrekten Ladungszustand der Batterie 27 anzeigt.

Die Abdeckkappe 40 selbst ist, wie insbesondere den Figuren 2 und 3 zu entnehmen ist, durch zwei Linsenkopfschrauben 46, 47 an einem radial überstehenden, oberen Flansch 48 des Einsatzes 8 festgelegt.

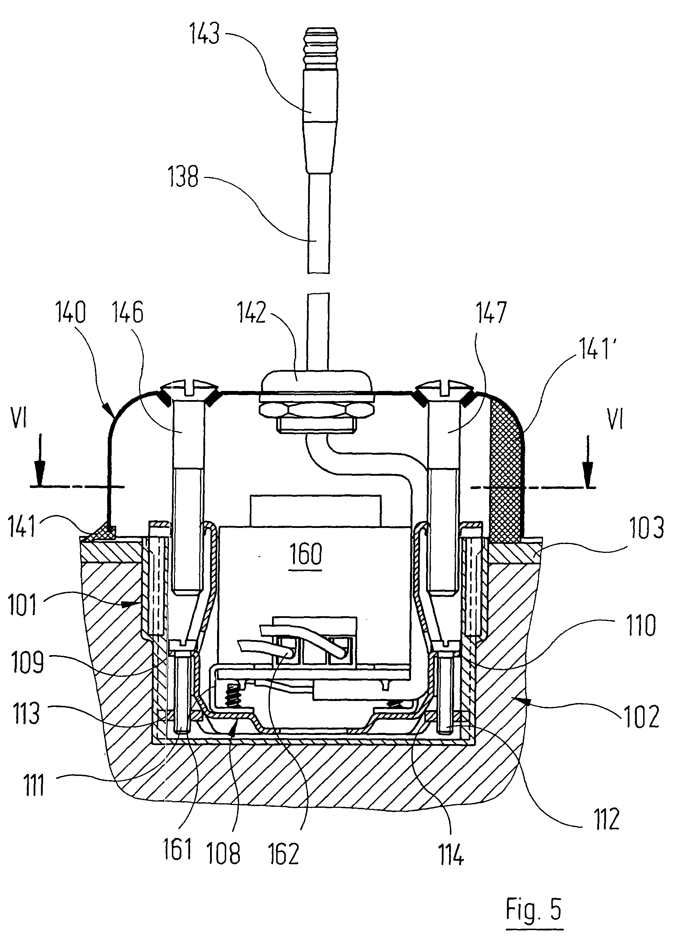

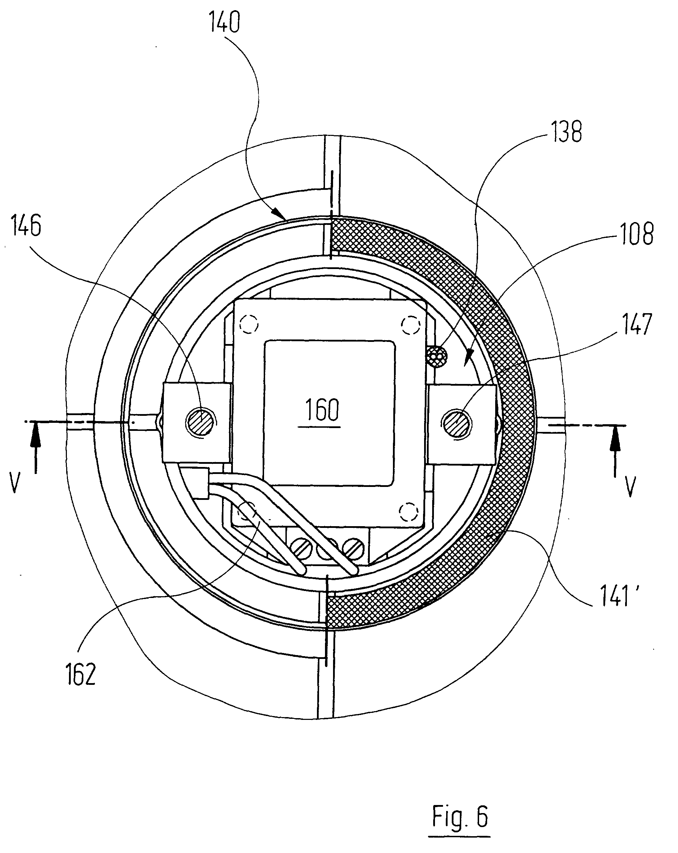

In den Figuren 5 und 6 ist ein zweites Ausführungsbeispiel einer Einrichtung dargestellt, welche der Versorgung eines elektrisch betätigten Gerätes im Sanitärbereich mit einer Niedrigvolt-Betriebsspannung dient. Dieses Ausführungsbeispiel ähnelt in vielerlei Hinsicht dem ersten, oben anhand der Figuren 1 bis 4 erläuterten Ausführungsbeispiel; entsprechende Teile sind daher mit demselben Bezugszeichen zuzüglich 100 gekennzeichnet.

In Figur 5 ist wiederum eine Unterputzdose 101 zu erkennen, die in ein mit einem Putz bzw. einer Verfliesung 103 abgedecktes Mauerwerk 102 eingelassen ist. Die Stromversorgungseinrichtung ist als Baueinheit auf einem Einsatz 108 aufgebaut, der dieselbe becherförmige Gestalt wie der Einsatz 8 des obigen Ausführungsbeispieles darstellt. Der Einsatz 108 ist mit Hilfe der Schrauben 111 und 112 sowie der Klemmstücke 113, 114 innerhalb der Unterputzdose 101 festgelegt. Identisch wie beim ersten Ausführungsbeispiel ist auch die Abdeckkappe 140, die mit den beiden Linsenkopfschrauben 146 und 147 an dem radial überstehenden Umfangsbund 148 des Einsatzes 108 befestigt ist.

Als Niederspannungsquelle ist nunmehr aber beim Ausführungsbeispiel nach den Figuren 5 und 6 statt der Batterie 27 und des Batteriehalters 15 des ersten Ausführungsbeispiels ein Transformator 160 vorgesehen. Der Transformator 160 ist mit geeigneten Befestigungsbügeln 161 ähnlich wie der Batteriehalter 15 des ersten Ausführungsbeispieles am Boden des Einsatzes 108 festgeschraubt. An die Primärwicklung des Transformators 160 ist die Netzleitung 162 angeschlossen, die bei diesem Ausführungsbeispiel durch ein ausgebrochenes Fenster 6, 7 der Unterputzdose 101 (vergl. Figur 1) aus dem Mauerwerk 102 in das Innere der Unterputzdose 101 eingeführt ist.

An die Sekundärwicklung des Transformators 160 ist das Niederspannungskabel 138 angeschlossen, welches wiederum durch eine Durchführung 142 in der oberen Stirnseite der Abdeckkappe 140 hindurchgeführt ist und an seinem Ende einen Stecker 143 besitzt.

Aus verständlichen Gründen weist das mit Transformator 160 arbeitende Ausführungsbeispiel an der oberen Stirnseite der Abdeckkappe 140 keine Kontrolleuchte auf, da ja keine Batterie vorhanden ist, deren Ladezustand überwacht werden muß.

Bei den oben dargestellten Ausführungsbeispielen wurde das Niederspannungskabel durch die Abdeckkappe 40 bzw. 140 hindurchgeführt. Bei einem nicht dargestellten Ausführungsbeispiel dagegen ist in der oberen Stirnseite der Abdeckkappe 140 eine wasserdichte Buchse vorgesehen, welche der Steckverbindung mit einem externen Versorgungskabel dient.

## Patentansprüche

1. Einrichtung zur Versorgung eines elektrisch betätigten Gerätes im Sanitärbereich mit einer Niedervolt-Betriebsspannung, die eine entsprechende über ein Niederspannungskabel mit der Sanitärarmatur zu verbindende Niederspannungsquelle enthält, wobei die Einrichtung als Baueinheit an einem Einsatz montiert ist, der zum Einsetzen in eine Norm-Unterputzdose ausgestattet ist,
dadurch gekennzeichnet,
a) daß der Einsatz mit Befestigungsmitteln (9 bis 12; 109 bis 112) versehen ist, die mit den Norm-Befestigungsmitteln (13, 14; 113, 114) der Unterputzdose (1; 101) zusammenwirken,
b) daß der Einsatz (8; 108) becherförmig ist, und
c) daß eine becherförmige Abdeckkappe (40; 140) an dem Einsatz (8; 108) befestigt ist, deren freier Rand unter Zwischenschaltung einer Dichtung (41, 41'; 141, 141') an die Außenfläche des Mauerwerks (2; 102), in welchem die Unterputzdose (1; 101) angeordnet ist, oder an einem dieses Mauerwerk (2; 102) überdeckenden Putz bzw. einer Verfliesung (3; 103) anlegbar ist.

2. Einrichtung nach Anspruch 1, dadurch gekennzeichnet, daß die Befestigungsmittel (9 bis 12; 109 bis 112) des Einsatzes (8; 108) mindestens einen radial überstehenden Befestigungsbereich (9, 10; 109, 110) umfassen, an welchem mindestens eine Befestigungsschraube (11, 12; 111, 112) angreift.

3. Einrichtung nach Anspruch 1 oder 2, dadurch gekennzeichnet, daß das Niederspannungskabel (38; 138) an der Niederspannungsquelle (27; 160) direkt angeschlossen und über eine wasserdichte Durchführung (42; 142) in der Abdeckkappe (40; 140) ausgeführt ist.

4. Einrichtung nach einem der Ansprüche 1 bis 3, dadurch gekennzeichnet, daß in der Abdeckkappe eine Steckbuchse oder ein Stecker zum Anschluß des Niederspannungskabels vorgesehen ist, die bzw. der mit der Niederspannungsquelle elektrisch verbunden ist.

5. Einrichtung nach einem der vorhergehenden Ansprüche, dadurch gekennzeichnet, daß die Niederspannungsquelle eine Batterie (27) ist, die in einem an dem Einsatz (8) festgelegten Batteriehalter (15) lösbar befestigt ist.

6. Einrichtung nach Anspruch 5, dadurch gekennzeichnet, daß der Batteriehalter (15) zwei Kontaktfedern (34, 35) umfaßt, die mit dem Niederspannungskabel (38) elektrisch verbunden oder verbindbar sind und bei eingesetzter Batterie (27) an den Kontakten der Batterie (27) elastisch federnd anliegen.

7. Einrichtung nach Anspruch 5 oder 6, dadurch gekennzeichnet, daß eine Spannlasche (30) vorgesehen ist, welche mit mindestens einem Bereich (30b) elastisch federnd an der eingesetzten Batterie (27) anliegt und dabei die Batterie (27) in den Batteriehalter (15) drückt.

8. Einrichtung nach Anspruch 7, dadurch gekennzeichnet, daß die Spannlasche (30) an der der Batterie (27) abgewandten Seite einen Bügel (30a) aufweist, der ein Fenster (31) des Batteriehalters (15) durchgreift und an dem auf der der Batterie (27) abgewandten Seite des Batteriehalters (15) eine Feder (32) angreift.

9. Einrichtung nach Anspruch 7 oder 8, dadurch gekennzeichnet, daß die Spannlasche (30) einen ebenen Hauptteil (30a) aufweist, der verschiebbar an einer Wand (25) des Batteriehalters (15) anliegt.

10. Einrichtung nach Anspruch 9, dadurch gekennzeichnet, daß die Spannlasche (30) an der Wand (25) des Batteriehalters (15) dadurch geführt ist, daß der Bügel (30d) einen Bereich aufweist, der parallel zum ebenen Hauptteil (30a) in einem Abstand von diesem verläuft, welcher der Stärke der Wand (25) des Batteriehalters (15) entspricht.

11. Einrichtung nach Anspruch 9 oder 10, dadurch gekennzeichnet, daß die Spannlasche (30) zumindest teilweise aus Metall besteht und in der Position, die sie bei eingesetzter Batterie (27) einnimmt, einen Abstand von den freiliegenden Bereichen der Kontaktfedern (34, 35) aufweist, dagegen in der Position, die sie bei entnommener Batterie (27) einnimmt, die freiliegenden Bereiche der Kontaktfedern (34, 35) miteinander elektrisch verbindet.

12. Einrichtung nach einem der Ansprüche 5 bis 11, dadurch gekennzeichnet, daß ein Elektronikbauteil (39) an dem Einsatz (8) vorgesehen ist, dem die Ausgangsspannung der Batterie (27) zugeführt ist und das den Ladezustand der Batterie (27) prüft, und daß an der Abdeckkappe (40) eine Kontrollampe (41) angebracht ist, die mit dem Elektronikbauteil (39) verbunden ist und anzeigt, ob der Ladezustand der Batterie (27) ausreicht.

13. Einrichtung nach einem der Ansprüche 1 bis 4, dadurch gekennzeichnet, daß die Niederspannungsquelle ein Transformator (160) ist, dessen Primärwicklung mit einer in das Innere der Unterputzdose (101) eingeführten Netzleitung (162) verbindbar und dessen Sekundärwicklung mit dem Niederspannungskabel (138) verbunden oder verbindbar ist.

## Claims

1. Device for supplying an electrically actuated appliance in the sanitary sector with a low operating voltage that contains a suitable low-voltage source to be connected via a low-voltage cable to the sanitary fitting, wherein the device is mounted as an assembly on an insert that is designed for insertion in a standard flush-type box,
characterized
a) in that the insert is provided with fixing means (9 to 12; 109 to 112) that interact with the standard fixing means (13, 14; 113, 114) of the flush-type box (1; 101) ,
b) in that the insert (8; 108) is beaker-shaped, and
c) in that there is attached to the insert (8; 108) a beaker-shaped covering cap (40; 140) whose free rim can be applied, with the insertion of a seal (41, 41'; 141, 141') to the outer surface of the masonry (2; 102) in which the flush-type box (1; 101) is disposed, or to plaster covering said masonry (2; 102) or tiling (3; 103).

2. Device according to Claim 1, characterized in that the fixing means (9 to 12; 109 to 112) of the insert (8; 108) comprise at least one radially overhanging fixing area (9, 10; 109, 110) on which at least one fixing screw (11, 12; 111, 112) acts.

3. Device according to Claim 1 or 2, characterized in that the low-voltage cable (38; 138) is directly connected to the low-voltage source (27; 160) and is brought out via a watertight grommet (42; 142) in the covering cap (40; 140) .

4. Device according to one of Claims 1 to 3, characterized in that there is provided in the covering cap a plug socket or a plug for connecting the low-voltage cable that is electrically connected to the low-voltage source.

5. Device according to one of the preceding claims, characterized in that the low-voltage source is a battery (27) that is detachably mounted in a battery holder (15) mounted on the insert (8).

6. Device according to Claim 5, characterized in that the battery holder (15) comprises two contact springs (34, 35) that are electrically connected or connectable to the low-voltage cable (38) and which rest in an elastically resilient manner against the contacts of the battery (27) when the battery (27) is inserted.

7. Device according to Claim 5 or 6, characterized in that a clamping strap (30) is provided at least one region (30b) of which rests in an elastically resilient manner against the inserted battery (27) and, in doing so, presses the battery (27) into the battery holder (15).

8. Device according to Claim 7, characterized in that the clamping strap (30) has, on the side remote from the battery (27), a bracket (30a) that engages through a window (31) in the battery holder (15) and acts on a spring (32) at that side of the battery holder (15) that is remote from the battery (27).

9. Device according to Claim 7 or 8, characterized in that the clamping strap (30) has a flat main part (30a) that rests in a displaceable manner on one wall (25) of the battery holder (15).

10. Device according to Claim 9, characterized in that the clamping strap (30) is routed along the wall (25) of the battery holder (15) as a result of the fact that the bracket (30d) has a region that extends parallel to the flat main part (30a) at a distance from the latter that is equal to the thickness of the wall (25) of the battery holder (15).

11. Device according to Claim 9 or 10, characterized in that the clamping strap (30) is composed at least partly of metal and, in the position that it assumes with the battery (27) inserted, is at a distance from the exposed regions of the contact springs (34, 35), but, in the position that it assumes with the battery (27) removed, electrically interconnects the exposed regions of the contact springs (34, 35).

12. Device according to one of Claims 5 to 11, characterized in that there is provided on the insert (8) an electronic component (39) to which the output voltage of the battery (27) is fed and that checks the state of charge of the battery ( 27), and in that there is mounted on the covering cap (40) a pilot lamp (41) that is connected to the electronic component (39) and indicates whether the state of charge of the battery (27) is adequate.

13. Device according to one of Claims 1 to 4, characterized in that the low-voltage source is a transformer (160) whose primary winding is connectable to a mains line (162) fed into the interior of the flush-type box (101) and whose secondary winding is connected or connectable to the low-voltage cable (138).

## Revendications

1. Dispositif d'alimentation, en une tension de service à faible intensité, d'un appareil à commande électrique utilisé dans des installations sanitaires, renfermant une source correspondante de basse tension devant être raccordée à la robinetterie sanitaire par l'intermédiaire d'un câble basse tension, le dispositif étant monté, en tant qu'ensemble structurel unitaire, sur une pièce intégrée équipée en vue de l'intégration dans une prise encastrée normalisée,
caractérisé par le fait
a) que la pièce intégrée est pourvue de moyens de fixation (9 à 12 ; 109 à 112) coopérant avec les moyens de fixation normalisés (13, 14 ; 113, 114) de la prise encastrée (1 ; 101) ;
b) que la pièce intégrée (8 ; 108) revêt la forme d'un calice ; et
c) qu'une coiffe de recouvrement (40 ; 140) en forme de coupelle est fixée à la pièce intégrée (8 ; 108), coiffe dont le bord libre peut être appliqué, avec interposition d'une garniture d'étanchement (41, 41' ; 141, 141'), contre la face extérieure de la maçonnerie (2 ; 102) dans laquelle la prise encastrée (1 ; 101) est logée, ou contre un enduit ou un carrelage (3 ; 103) recouvrant respectivement cette maçonnerie (2 ; 102).

2. Dispositif selon la revendication 1, caractérisé par le fait que les moyens de fixation (9 à 12 ; 109 à 112) de la pièce intégrée (8 ; 108) englobent au moins une zone de fixation (9, 10 ; 109, 110) radialement débordante, dans laquelle au moins une vis de fixation (11, 12 ; 111, 112) vient en prise.

3. Dispositif selon la revendication 1 ou 2, caractérisé par le fait que le câble basse tension (38 ; 138) est directement raccordé à la source de basse tension (27 ; 160), et est extrait par l'intermédiaire d'une traversée (42 ; 142) étanche à l'eau, pratiquée dans la coiffe de recouvrement (40 ; 140).

4. Dispositif selon l'une des revendications 1 à 3,
caractérisé par le fait qu'une douille d'enfichage ou une fiche, prévue dans la coiffe de recouvrement en vue du raccordement du câble basse tension, est connectée électriquement avec la source de basse tension.

5. Dispositif selon l'une des revendications précédentes, caractérisé par le fait que la source de basse tension est une batterie (27) fixée, de manière libérable, dans un support (15) fermement arrêté sur la pièce intégrée (8).

6. Dispositif selon la revendication 5, caractérisé par le fait que le support (15) de la batterie comprend deux ressorts de contact (34, 35) qui sont ou peuvent être connectés électriquement au câble basse tension (38) et qui, lorsque la batterie (27) est mise en place, sont appliqués élastiquement contre les contacts de ladite batterie (27).

7. Dispositif selon la revendication 5 ou 6, caractérisé par le fait qu'il est prévu une patte de serrage (30) qui porte élastiquement, par au moins une région (30b), contre la batterie (27) mise en place, et pousse alors ladite batterie (27) dans le support (15).

8. Dispositif selon la revendication 7, caractérisé par le fait que la patte de serrage (30) présente, du côté tourné à l'opposé de la batterie (27), un étrier (30_{d}) traversant une fenêtre (31) du support (15) de la batterie, et avec lequel un ressort (32) vient en prise du côté dudit support (15) qui est tourné à l'opposé de la batterie (27).

9. Dispositif selon la revendication 7 ou 8, caractérisé par le fait que la patte de serrage (30) présente une partie principale plane (30a) appliquée, de manière coulissante, contre une paroi (25) du support (15) de la batterie.

10. Dispositif selon la revendication 9, caractérisé par le fait que la patte de serrage (30) est guidée sur la paroi (25) du support (15) de la batterie grâce au fait que l'étrier (30d) comporte une région s'étendant parallèlement à ladite partie principale plane (30a) à une distance, vis-à-vis de cette dernière, qui correspond à l'épaisseur de la paroi (25) dudit support (15) de la batterie.

11. Dispositif selon la revendication 9 ou 10, caractérisé par le fait que la patte de serrage (30) consiste au moins partiellement en un métal et se trouve, dans la position qu'elle prend lorsque la batterie (27) est mise en place, à distance des régions libres des ressorts de contact (34, 35) ; mais assure, en revanche, la connexion électrique mutuelle desdites régions libres des ressorts de contact (34, 35) dans la position qu'elle prend lorsque ladite batterie (27) est déposée.

12. Dispositif selon l'une des revendications 5 à 11,
caractérisé par le fait qu'il est prévu, sur la pièce intégrée (8), un composant électronique (39) auquel est appliquée la tension de sortie de la batterie (27), et qui vérifie l'état de charge de ladite batterie (27) ; et par le fait qu'un témoin lumineux de contrôle (44), implanté sur la coiffe de recouvrement (40), est raccordé audit composant électronique (39) et indique si l'état de charge de la batterie (27) est suffisant.

13. Dispositif selon l'une des revendications 1 à 4,
caractérisé par le fait que la source de basse tension est un transformateur (160) dont l'enroulement primaire peut être connecté à un conducteur (162) du secteur, introduit dans l'espace interne de la prise encastrée (101), et dont l'enroulement secondaire est ou peut être connecté au câble basse tension (138).
